# EUROPÄISCHE PATENTSCHRIFT

(11) **EP 0 400 398 B1**
(45) Veröffentlichungstag und Bekanntmachung des Hinweises auf die Patenterteilung: **01.02.1995**
(21) Anmeldenummer: 90109252.8
(22) Anmeldetag: 16.05.1990
(51) Int. Cl.: H04L 7/033

(54) **Verfahren zum Empfang eines binären Digitalsignals**
Method for receiving binary digital signals
Méthode pour recevoir des signaux numériques binaires

(30) Priorität: 29.05.1989 DE 3917426
(43) Veröffentlichungstag der Anmeldung: 05.12.1990
(73) Patentinhaber: SIEMENS AKTIENGESELLSCHAFT, 80333 München (DE)
(72) Erfinder: Dragotin, Alexander, Dipl.-Ing., D-8039 Puchheim (DE)

(56) Entgegenhaltungen:
- EP-A- 0 168 330
- EP-A- 0 363 513
- US-A- 4 821 296

## Beschreibung

Die Erfindung bezieht sich auf ein Verfahren und eine Anordnung zum Empfang eines binären Digitalsignals, das auch Phasensprünge aufweisen darf, unter Verwendung eines Taktes, dessen Frequenz gleich oder plesiochron zur Bitrate des Digitalsignals und dessen Phasendifferenz gegenüber diesem Digitalsignal beliebig ist.

Aus der deutschen Offenlegungsschrift DE 34 41 501 A1 ist bereits eine Schaltungsanordnung zum Regenerieren und Synchronisieren eines Digitalsignals bekannt, die Phasenschwankungen der ankommenden Signalbits ausgleicht. Dazu enthält sie eine Reihenschaltung aus einer steuerbaren Verzögerungsleitung und einer Entscheidungslogik. Erstere ist über Adressenleitungen und letztere ist über Steuerleitungen an eine Verzögerungsregeleinheit angeschlossen. Die Entscheidungslogik wird über eine TaktLeitung mit einem Systemtakt versorgt, dessen Frequenz der Bitrate des zu regenerierenden und synchronisierenden Digitalsignals entspricht.

Bei einem idealen binären Digitalsignal liegen die ansteigenden und abfallenden Flanken in einem festen Raster, das durch die Periode der Taktfrequenz vorgegeben ist. Jede Abweichung von Flanken aus diesem Raster wird als Jitter bezeichnet. Innerhalb definierter Grenzen darf dieser beim Empfang nicht zu einem Informationsfehler führen.

Beim Jitter können zwei grundsätzliche Arten unterschieden werden. Die erste sind Abweichungen der Zeitpunkte zweier aufeinanderfolgenden Flanken von dem vorgegebenen Raster, die zweite Art sind sich langsam aufbauende Phasenverschiebungen, die zu einer Zeitverschiebung von mehr als einer Periode führen können. Bei einem älteren Vorschlag (88117055.9 = EP-A-363 513) wird aus einem Takt über einer Laufzeitkette eine Folge von Takten gebildet, die etwa gleiche Phasenabstände aufweisen. Aus diesen Takten werden kurze Impulse abgeleitet. Beim Eintreffen jeder als wirksam ausgewählten Flanke eines Digitalsignals wird ein Abfrageimpuls, der auch verzögert werden kann, abgeleitet, mit dem über UND-Gattern ein Vorhandensein von Impulsen abgefragt wird. Über SR-Flipflops und UND-Gatter werden mit vorhandenen Impulsen ausgewählte Takte durchgeschaltet und ODER-verknüpft als Einlesetakt verwendet. Die Gesamtlaufzeit dieser Verfahrensschritte wird gegebenenfalls durch die Verzögerung des Abfrageimpulses derart dimensioniert, daß die wirksame Flanke des Einlesetaktes stets eine halbe Taktperiode nach der wirksamen Flanke des Digitalsignals auftritt. Als wirksame Flanke wird eine Ableitung von Impulsen dienende Flanke bezeichnet.

Der Erfindung liegt die Aufgabe zugrunde, ein weiteres Verfahren zum trägheitslosen Empfang eines binären Digitalsignals mit wechselnder Phasenlage anzugeben.

Ausgehend von einem Verfahren der einleitend geschilderten Art wird diese Aufgabe erfindungsgemäß mit dem im Anspruch 1 angegebenen Verfahrensschritten gelöst. Für den Fall, daß die Verzögerung der Laufzeitkette länger als die Taktperiode ist, ist das Merkmal des Anspruchs 2 hinzuzufügen, das ein Durchschalten zweier nicht benachbarter Digitalsignale verhindert. Eine entsprechende Anordnung ist in Patentanspruch 3 angegeben, während deren Ausgestaltungen den darauffolgenden Unteransprüchen zu entnehmen sind.

Das erfindungsgemäße Verfahren läßt sich bei synchron arbeitenden Einrichtungen einsetzen. Dabei wird ein einwandfreier Empfang der Digitalsignale durch Ausgleich einer beliebigen Phasenlage ermöglicht. Dieses Verfahren wirkt als Taktrückgewinnung.

Eine weitere Anwendungsmöglichkeit ist eine Blockvermittlung, bei der eine Synchronisierung der Taktfrequenzen nicht notwendig ist. Das Verfahren kann angewendet werden, um eine sich wegen der Taktfrequenzunterschiede kontinuierlich veränderte Phase auszugleichen. Es kann aber auch benutzt werden, wenn die verschiedenen Informationsblöcke verschiedene Phasenlagen aufweisen.

Anhand von Ausführungsbeispielen wird die Erfindung nachstehend näher erläutert.
- Fig. 1: zeigt eine erfindungemäße Anordnung,
- Fig. 2: zeigt ein Laufzeitglied,
- Fig. 3: zeigt einen Impulserzeuger,
- Fig. 4: zeigt einen Abfrageimpulserzeuger,
- Fig. 5: zeigt eine Anordnung nach Fig.1 detalliert,
- Fig. 6: zeigt ein Pulsdiagramm zur Erläuterung der Fig. 5
- Fig. 7: zeigt eine erste Variante eines Schaltungsteils der Anordnung nach Fig.5 und
- Fig. 8: zeigt eine zweite Variante eines Schaltungsteils der Anordnung nach Fig. 5.

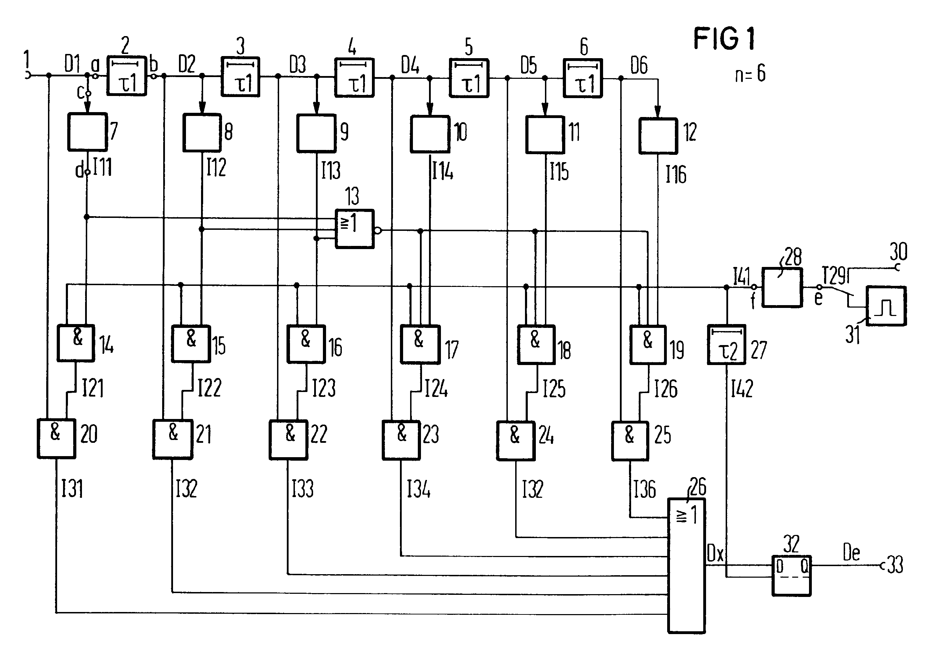

Fig.1 zeigt eine erfindungsgemäße Anordnung. Sie enthält Laufzeitglieder 2-6 mit einer Laufzeit τ1, Impulserzeuger 7-12, ein NOR-Gatter 13, UND-Gatter 14-25, ein ODER-Gatter 26, ein Laufzeitglied 27 mit einer Laufzeit τ2, einen Abfrageimpulserzeuger 28, einen Umschalter 29, einen Taktgenerator 31 und ein D-Flipflop 32. In der Praxis ist die Anzahl der Laufzeitglieder mit der Laufzeit τ1 in der Regel größer.

Ein Digitalsignal D1 wird dem Eingang 1 zugeführt. Nach jedem der Laufzeitglieder 2-6 entsteht ein weiteres Digitalsignal D2-D6, das gegenüber dem vorangehenden jeweils um 1 verzögert ist. In den Impulserzeugern 7-12 werden aus den ansteigenden und abfallenden Flanken der Digitalsignale D1-D6 Impulse I11-I16 abgeleitet.

Über den Umschalter 29 wird dem Abfrageimpulserzeuger 28 entweder von außen oder vom Taktgenerator 31 ein Takt T zugeführt.

Die Abfrageimpulse I41 werden mit den sich überlappenden Impulsen I11-I16 in den UND-Gattern 14-19 verknüpft. Soweit eine zeitliche Überlappung der Impulse I11-I16 mit den Abfrageimpulsen I41 vorliegt, entstehen an den Ausgängen der UND-Gatter 14-19 Impulse I21-I26. Diese werden in den UND-Gatter 20-25 mit den Digitalsignalen D1-D6 verknüpft. Tritt beispielsweise ein Impuls I24 auf, dann wird das Digitalsignal D4 als Impuls I34 über das UND-Gatter 23 durchgeschaltet und gelangt zum ODER-Gatter 26, an dessen Ausgang es als ausgewähltes Digitalsignal Dx erscheint. Dieses wird dem D-Eingang des D-Flipflops 32 zugeführt, an dessen Takteingang die im Laufzeitglied 27 um die Laufzeit τ2 verzögerten Abfrageimpulse I42 anliegen. Vom Q-Ausgang dieses D-Flipflops 32 gelangt das nunmehr empfangene Digitalsignal De zum Ausgang 33.

Ist die Verzögerung in der Laufzeitkette 2-6 größer als die Taktperiode des Digitalsignals D1 dann können - wenn man von Überlappungen absieht - zwei Impulse auftreten. Tritt einer der Impulse I11-I13 auf, dann bewirkt das NOR-Gatter 13, daß in den UND-Gattern 17-19 keine Verknüpfung möglich ist.

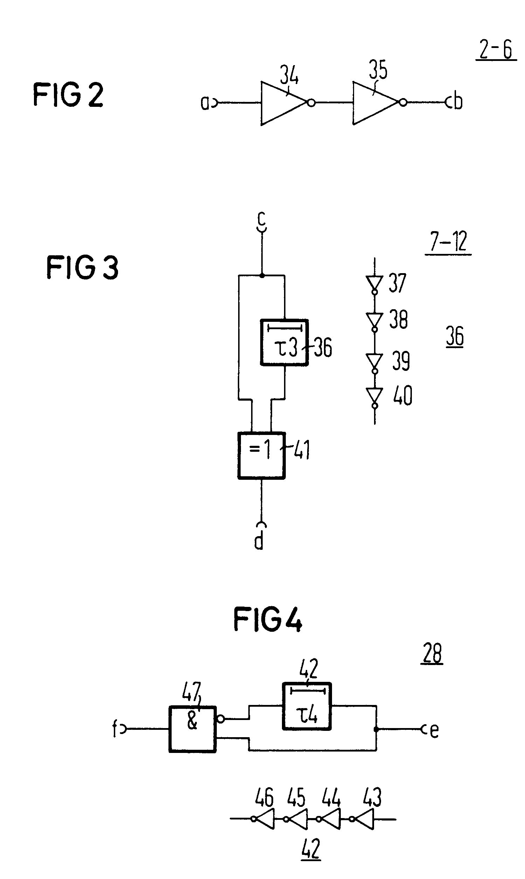

Fig.2 zeigt ein Ausführungsbeispiel eines der Laufzeitglieder 2-6. Es enthält zur Laufzeitgewinnung Gatter 34 und 35, deren Laufzeiten zusammen die Laufzeit τ1 ergeben. Dieses Laufzeitglied kann zwischen die Anschlüsse a und b in Fig.1 eingesetzt werden.

Fig.3 zeigt ein Ausführungsbeispiel der Impulserzeuger 7-12 mit einem Laufzeitglied 36 einer Laufzeit τ3 und mit einem Exklusiv-ODER-Gatter 41. Das Laufzeitglied 36 kann durch Gatter 37 bis 40 realisiert werden. Die Laufzeit τ3 ist hier gleich 2·τ1 gewählt. Das Exklusiv-ODER-Gatter 41 gibt einen Impuls (I11-I16) ab, solange nur an einem seiner Eingänge ein Impuls anliegt. Dieser Impulserzeuger kann zwischen die Anschlüsse c und d in Fig. 1 eingesetzt werden.

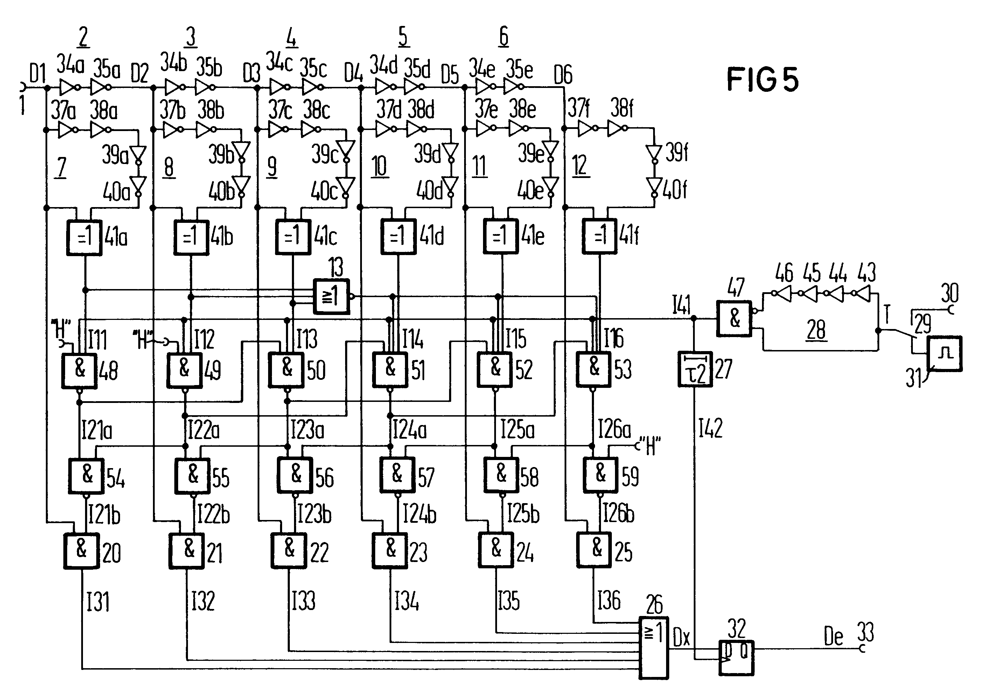

Fig. 4 zeigt ein Ausführungsbeispiel eines Abfrageimpulserzeugers 28 mit einem Laufzeitglied 42 aus vier Gattern 43-46 eine Gesamtlaufzeit τ4 und mit einem UND-Gatter 47. Dieses gibt solange einen Impuls I41 ab, wie an seinem nichtinvertierenden Eingang logisch "H" und an seinem invertierenden Eingang logisch "L"anliegt. Dieser Abfrageimpulserzeuger 27 kann zwischen die Anschlüsse e und f in Fig. 1 eingesetzt werden.

Fig. 5 zeigt eine detalliertere Ausführung der Erfindung. Im Gegensatz zur Anordnung nach Fig. 1 sind die Laufzeitglieder 2-6 durch Laufzeitglieder nach Fig. 2, die Impulserzeuger 7-12 durch solche nach Fig. 3 und der Abfrageimpulserzeuger 28 durch den nach Fig. 4 ersetzt. Weiter sind anstelle von UND-Gattern 14-19 NAND-Gatter 48-59 eingefügt.

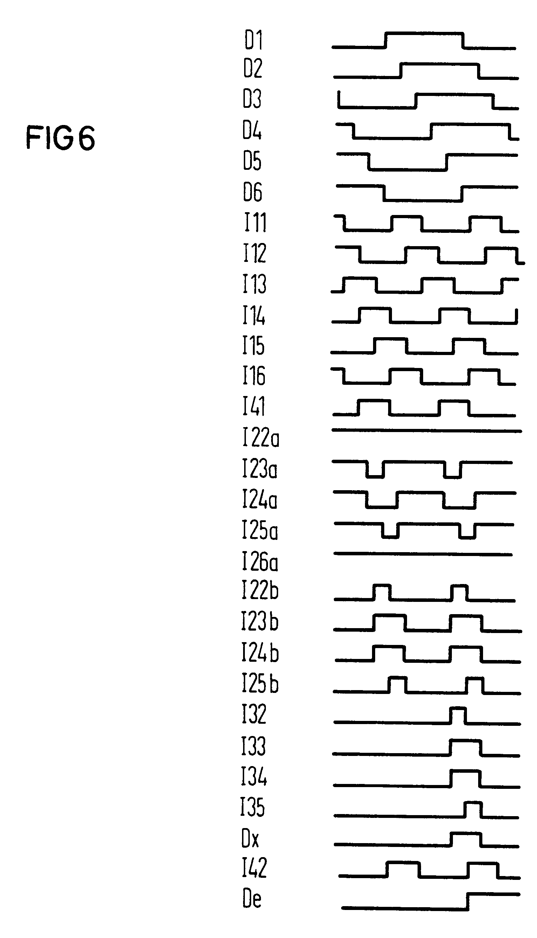

Fig. 6 zeigt ein Pulsdiagramm zur Erläuterung der Wirkungsweise dieser Anordnung.

Das Digitalsignal D1 wird in der Laufzeitkette 34a, 35a bis 34e, 35e schrittweise um je zwei Gatterverzögerungszeiten verzögert, wodurch die Digitalsignale D2 bis D6 entstehen. Wenn sich am Eingang 1 oder an einem Ausgang eines der Zweifach-Laufzeitglieder 34a, 35a bis 34e, 35e der logische Zustand eines der Digitalsignale D1 bis D6 verändert, wird durch das zugehörige Exklusiv-ODER-Gatter ein vier Gatterverzögerungszeiten langer Impuls gebildet. Wäre es das Exklusiv-ODER-Gatter 41c, dann entstünde mit Hilfe der Gatter 37c bis 40c ein Impuls I13.

Von jeder positiven Flanke des Taktes T wird durch die Gatter 43 bis 46 und das UND-Gatter 47 ein vier Gatterlaufzeiten langer Impuls I41 gebildet. Trifft dieser beispielsweise am Eingang des NAND-Gatters 50 mit dem Impuls I13 und mit dem Ausgangssignal I21a des in Übertragungsrichtung des Digitalsignals D1 vorvorherigen NAND-Gatters 48 jeweils im logischen Zustand "H" zusammen, dann ergibt die NAND-Verknüpfung I23a einen Zustand logisch "L" am Ausgang des NAND-Gatters 50. Die Einbeziehung des Ausgangssignals des vorvorherigen NAND-Gatters 48 bewirkt eine Impulsverkürzung.Wenn einer der Impulse I21a bis I26a einen Zustand logsich "L" aufweist, erscheint am Ausgang des zugehörigen NAND-Gatters 54-59 ein Zustand logisch "H". Mit diesem kann das zugehörige UND-Gatter 20-25 das entsprechende Digitalsignal (D1-D6) durchschalten.

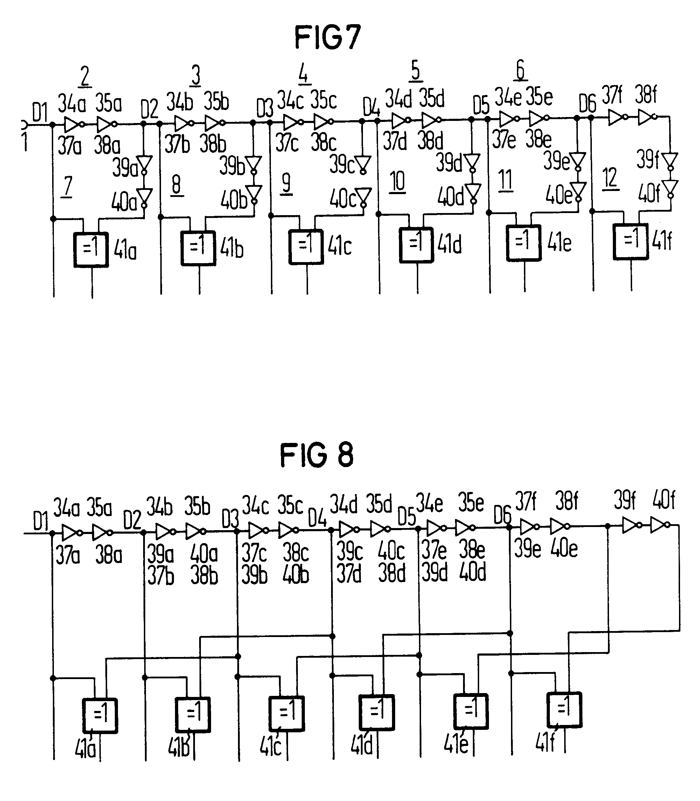

In Fig. 7 erfüllen die Gatter 34a-34c und 35a-35e nach Fig. 5 zugleich die Aufgabe der Gatter 37a-37e und 38a-38e. In Fig. 7 erfüllen sie bis zu drei Aufgaben, wie die mehrfachen Bezugszeichen an den Gattern zeigen.

## Patentansprüche

1. Verfahren zum Empfang eines binären Digitalsignals (D1), das auch Phasensprünge aufweisen darf, unter Verwendung eines Taktes (T), dessen Frequenz gleich oder plesiochron zur Bitrate des Digitalsignals (D1) und dessen Phasendifferenz gegenüber diesem Digitalsignal (D1) beliebig ist,
**dadurch gekennzeichnet,**
daß aus den ansteigenden oder abfallenden Flanken des Taktes (T) Abfrageimpulse (I41) abgeleitet werden, deren Dauer klein gegenüber der Taktperiode aber groß genug ist, daß über sie logische Elemente angesteuert werden können, und deren Dauer länger als die Einstell- und Haltezeit von D-Flipflops zuzüglich der Zeitspanne der Impulsdauerverzerrung der Digitalsignale während der Durchführung des Verfahrens ist, daß aus dem Digitalsignal (D1) durch Verzögerung durch n-1 (n>3) annähernd gleiche erste Laufzeiten (τ1) bei einer Gesamtlaufzeit von mindestens einer Taktperiode und weniger als zwei Taktperioden n-1 weitere Digitalsignale (D2-D6) abgeleitet werden,
daß aus den ansteigenden und abfallenden Flanken aller Digitalsignale (D1-D6) jeweils Impulse (I11-I16) abgeleitet werden, von denen wenigstens einer während der vollen Dauer eines Abfrageimpulses (I41) auftritt und deren Dauer klein gegenüber der Taktperiode, größer als die erste Laufzeit (τ1) und bei großen Werten von n groß genug ist, daß über sie logische Elemente angesteuert werden können,
daß die Abfrageimpulse (I41) mit jedem gleichzeitig aufgetretenen Impuls separat UND-verknüpft werden,
daß die aus dieser UND-Verknüpfung entstandenen Signale über eine weitere UND-Verknüpfung die zugeordneten Digitalsignale durchschalten,
daß die durchgeschalteten Digitalsignale ODER-verknüpft werden und
daß das sich aus der ODER-Verknüpfung ergebende interne Digitalsignal (Dx) zur Gewinnung des empfangenen Digitalsignals (De) mit weiteren Abfrageimpulsen (I42) abgetastet wird, nachdem diese mit einer zweiten Laufzeit (τ2) optimal derart verzögert wurden, daß die Abtastung etwa um ein Viertel Taktperiode nach der wirksamen Flanke des internen Digitalsignals (Dx) erfolgt.

2. Verfahren nach Anspruch 1,
**dadurch gekennzeichnet,**
daß die bezüglich der Verzögerung etwa erste Hälfte der Impulse (I11-I13) NOR-verknüpft wird und
daß das sich aus dieser NOR-Verknüpfung ergebende Signal in die UND-Verknüpfung der restlichen Impulse (I14-I16) mit den Abfrageimpulsen (I41) einbezogen wird.

3. Anordnung zum Empfang eines binären Digitalsignals (D1), das auch Phasensprünge aufweisen darf, unter Verwendung eines Taktes (T), dessen Frequenz gleich oder plesiochron zur Bitrate des Digitalsignals (D1) und dessen Phasendifferenz gegenüber diesem Digitalsignal (D1) beliebig ist,
**dadurch gekennzeichnet,**
daß eine Laufzeitkette aus n-1 ersten Laufzeitgliedern (2-6) mit einer ersten Laufzeit (τ1) vorgesehen ist, die zur Ableitung von n-1 verzögerten Digitalsignalen (D2-D6) aus dem Digitalsignals (D1) am Eingang (1) dient,
daß an diesen Eingang (1) und an dem Ausgang jedes Laufzeitgliedes (2-6) einer von n Impulserzeugern (7-12) angeschlossen ist, die Impulse (I11-I16) aus den Digitalsignalen (D1-D6) ableiten, daß ein Abfrageimpulserzeuger (28) zur Ableitung von Abfrageimpulsen (I41) aus einem Takt (T) vorgesehen ist,
daß n erste UND-Gatter (14-19) vorgesehen sind, deren erster Eingang mit dem Ausgang jeweils eines der Impulserzeuger (7-12) und deren zweiter Eingang mit dem Ausgang des Abfrageimpulserzeugers (28) verbunden ist,
daß n zweite UND-Gatter (20-25) vorgesehen sind, deren erster Eingang mit dem Eingang (1) bzw. mit dem Ausgang jeweils eines Laufzeitgliedes (2-6) und deren zweiter Eingang mit dem Ausgang jeweils eines der ersten UND-Gatter (14-19) verbunden ist,
daß ein ODER-Gatter (26) vorgesehen ist, dessen Eingänge mit dem Ausgang jeweils eines der zweiten UND-Gatter (20-25) verbunden sind,
daß ein zweites Laufzeitglied (27) mit einer zweiten Laufzeit (τ2) vorgesehen ist, das mit dem Ausgang des Abfrageimpulserzeugers (28) verbunden ist, und
daß ein D-Flipflop (32) vorgesehen ist, dessen D-Eingang mit dem Ausgang des ODER-Gatters (26), dessen Takteingang mit dem Ausgang des zweiten Laufzeitgliedes (27) und dessen Q-Ausgang mit dem Ausgang (33) für das empfangene Digitalsignal (De) verbunden ist.

4. Anordnung nach Anspruch 3,
**dadurch gekennzeichnet,**
daß ein NOR-Gatter (13) vorgesehen ist, dessen Eingänge jeweils mit einem Ausgang der bezüglich der Verzögerung des Digitalsignals (D1) etwa ersten Hälfte der Impulserzeuger (7-9) verbunden sind und dessen Ausgang an einen zusätzlichen Eingang der diesen nicht zugeordneten ersten UND-Gatter (17-19) angeschlossen ist.

5. Anordnung nach Anspruch 3 oder 4,
**dadurch gekennzeichnet,**
daß als Impulserzeuger (7-12) ein Exklusiv-ODER-Gatter (41) vorgesehen ist, dessen erster Eingang mit dem Eingang (e) des Impulserzeugers (7-12), dessen zweiter Eingang über ein drittes Laufzeitglied (36) mit einer dritten Laufzeit ( 3) mit dem Eingang (c) des Impulserzeugers (7) und dessen Ausgang mit dem Ausgang (d) dieses Impulserzeugers (7) verbunden ist.

6. Anordnung nach Anspruch 3 oder 4,
**dadurch gekennzeichnet,**
daß in dem Abfrageimpulserzeuger (28) ein UND-Gatter (47) vorgesehen ist, dessen erster nichtinvertierender Eingang mit dem Eingang (e) des Abfrageimpulserzeugers (28), dessen zweiter invertierender Eingang über ein viertes Laufzeitglied (42) mit einer vierten Laufzeit (τ4) mit dem Eingang (e) des Abfrageimpulserzeugers (28) und dessen Ausgang mit dem Ausgang (f) dieses Abgfrageimpulserzeugers (28) verbunden ist.

7. Anordnung nach einem der Ansprüche 3 bis 6,
**dadurch gekennzeichnet**,
daß als Laufzeitglieder (2-6, 27, 36, 42) Reihenschaltungen von Gattern (34, 35, 37-40, 43-46) vorgesehen sind.

8. Anordnung nach Anspruch 5 oder 7,
**dadurch gekennzeichnet,**
daß die ersten Laufzeitglieder (7-12) wenigstens teilweise zugleich als dritte Laufzeitglieder (36) dienen, indem der zweite Eingang jedes Exklusiv-ODER-Gatters (41) mit dem Ausgang des unmittelbar danach liegenden ersten Laufzeitgliedes verbunden ist.

9. Anordnung nach einem der Ansprüche 3 bis 8,
**dadurch gekennzeichnet,**
daß an die Stelle der ersten UND-Gatter (14-19) erste NAND-Gatter (48-53), deren erster Eingang mit dem Ausgang jeweils eines der Impulserzeuger (7-12), deren zweiter Eingang mit dem Ausgang des Abfrageimpulserzeugers (28) und dessen dritter Eingang mit Ausgang des jeweils vorvorher liegenden ersten NAND-Gatters oder, wenn nicht vorhanden, mit logisch "H" verbunden ist, und zweite NAND-Gatter (54-59) treten, deren erster Eingang mit dem Ausgang des gleichliegenden ersten NAND-Gatters (48-53), dessen zweiter Eingang mit dem ersten Eingang des nachfolgenden zweiten NAND-Gatters und deren Ausgang mit dem zweiten Eingang des zweiten gleichliegenden UND-Gatters (20-25) verbunden ist.

## Claims

1. Method for receiving a binary digital signal (D1), which may also exhibit phase shifts, using a clock (T) whose frequency is equal to or plesiochronous with the bit rate of the digital signal (D1) and whose phase difference is arbitrary with respect to said digital signal (D1), characterized
in that read pulses (I41) are derived from the leading or trailing edges of the clock (T), the duration of which pulses are short in relation to the clock period but are long enough that logic elements can be driven therewith, and the duration of which is longer than the setting and holding time of D-type flip-flops plus the time span of the pulse duration distortion of the digital signals during the execution of the method,
in that, given an overall delay time of at least one clock period and fewer than two clock periods, n-1 further digital signals (D2-D6) are derived from the digital signal (D1) by delaying by n-1 (n>3) approximately equal first delay times (τ1),
in that pulses (I11-I16) are derived in each case from the leading and trailing edges of all digital signals (D1-D6), at least one of which pulses appears during the full duration of a read pulse (I41) and its duration is short in relation to the clock period, is longer than the first delay time (τ1) and, given high values of n, is long enough that logic elements can be driven therewith, in that the read pulses (I41) are AND-gated separately with each simultaneously appearing pulse,
in that the signals resulting from this AND-gating connect through the associated digital signals via a further AND-gating,
in that the through-connected digital signals are OR-gated,
and in that the internal digital signal (Dx) resulting from the OR-gating is sampled with further read pulses (I42) to obtain the received digital signal (De) after said read pulses have been delayed optimally by a second delay time (τ2) in such a way that the sampling takes place approximately one quarter of a clock period after the active edge of the internal digital signal (Dx).

2. Method according to Claim 1, characterized in that approximately the first half of the pulses (I11-I13) with respect to the delay are NOR-gated, and in that the signal resulting from this NOR-gating is included in the AND-gating of the remaining pulses (I14-I16) with the read pulses (I41).

3. Arrangement for receiving a binary digital signal (D1), which may also exhibit phase shifts, using a clock (T) whose frequency is equal to or plesiochronous with the bit rate of the digital signal (D1) and whose phase difference is arbitrary with respect to said digital signal (D1), characterized
in that a delay chain comprising n-1 first delay elements (2-6) having a first delay time (τ1) is provided which serves to derive n-1 delayed digital signals (D2-D6) from the digital signal (D1) at the input (1),
in that one of n pulse generators (7-12) which derive pulses (I11-I16) from the digital signals (D1-D6) is connected to said input (1) and at the output of each delay element (2-6),
in that a read pulse generator (28) for deriving read pulses (I41) from a clock (T) is provided,
in that n first AND gates (14-19) are provided, the first input of which is connected to the output of in each case one of the pulse generators (7-12) and the second input of which is connected to the output of the read pulse generator (28),
in that n second AND gates (20-25) are provided, the first input of which is connected to the input (1) or, respectively, to the output of in each case one delay element (2-6), and the second input of which is connected to the output of in each case one of the first AND gates (14-19),
in that an OR gate (26) is provided, the inputs of which are connected to the output of in each case one of the second AND gates (20-25),
in that a second delay element (27) having a second delay time (τ2) is provided which is connected to the output of the read pulse generator (28),
and in that a D-type flip-flop (32) is provided, the D-input of which is connected to the output of the OR gate (26), the clock input of which is connected to the output of the second delay element (27) and the Q-output of which is connected to the output (33) for the received digital signal (De).

4. Arrangement according to Claim 3, characterized in that a NOR gate (13) is provided, the inputs of which are connected in each case to one output of approximately the first half of the pulse generators (7-9) with respect to the delay of the digital signal (D1), and the output of which is connected to an additional input of the first AND gates (17-19) not associated therewith.

5. Arrangement according to Claim 3 or 4, characterized in that an exclusive-OR gate (41) is provided as pulse generator (7-12), the first input of which is connected to the input (e) of the pulse generator (7-12), the second input of which is connected via a third delay element (36) having a third delay time (τ3) to the input (c) of the pulse generator (7), and the output of which is connected to the output (d) of said pulse generator (7).

6. Arrangement according to Claim 3 or 4, characterized in that provided in the read pulse generator (28) is an AND gate (47), the first non-inverting input of which is connected to the input (e) of the read pulse generator (28), the second inverting input of which is connected via a fourth delay element (42) having a fourth delay time (τ4) to the input (e) of the read pulse generator (28), and the output of which is connected to the output (f) of said read pulse generator (28).

7. Arrangement according to one of Claims 3 to 6, characterized in that series circuits of gates (34, 35, 37-40, 43-46) are provided as delay elements (2-6, 27, 36, 42).

8. Arrangement according to Claim 5 or 7, characterized in that the first delay elements (7-12) simultaneously serve at least partially as third delay elements (36), in that the second input of each exclusive-OR gate (41) is connected to the output of the directly following first delay element.

9. Arrangement according to one of Claims 3 to 8, characterized in that taking the place of the first AND gates (14-19) are first NAND gates (48-53), the first input of which is connected to the output of in each case one of the pulse generators (7-12), the second input of which is connected to the output of the read pulse generator (28), and the third input of which is connected to the output of the respective last but one first NAND gate or, if not present, to logical "H", and second NAND gates (54-59), the first input of which is connected to the output of the identically situated first NAND gate (48-53), the second input of which is connected to the first input of the following second NAND gate, and the output of which is connected to the second input of the second identically situated AND gate (20-25).

## Revendications

1. Procédé de réception d'un signal (D1) numérique binaire, qui peut présenter également des sauts de phase, en utilisant une cadence (T), dont la fréquence est égale ou plésiochrone au débit binaire du signal (D1) numérique, et dont la différence de phase par rapport à ce signal (D1) numérique est quelconque,
caractérisé en ce que
on obtient, à partir des fronts montants et descendants de la cadence (T), des impulsions (141) d'interrogation, dont la durée est petite par rapport à la période de la cadence, mais est suffisamment grande pour que l'on puisse commander par elles des éléments logiques et dont la durée est plus grande que le temps d'établissement et de maintien de bascules D bistables ajouté à l'intervalle de temps correspondant à la durée de distorsion des impulsions des signaux numériques pendant que l'on met en oeuvre le procédé,
on obtient, à partir du signal numérique (D1) n-1 autres signaux numériques (D2 à D6) en retardant par n-1 (n > 3) premiers retards (τ1) approximativement égaux pour un retard total supérieur à au moins une période de cadence et inférieur à deux périodes de cadence,
on obtient, à partir des fronts montants et descendants de tous les signaux (D1 à D6) numériques, des impulsions (I11 à I16), dont au moins l'une apparaît pendant la durée totale d'une impulsion (I41) d'interrogation et dont la durée est petite par rapport à la période de la cadence, plus grande que le premier retard (τ1) et est suffisamment grande pour les grandes valeurs de n, pour que l'on puisse commander par elles des éléments logiques,
on combine séparément par des opérations ET les impulsions (I41) d'interrogation avec chaque impulsion apparaissant en même temps,
les signaux obtenus par cette combinaison ET transmettent par une autre combinaison ET les signaux numériques associés,
on combine par des opérations OU les signaux transmis et
on échantillonne le signal numérique (Dx) interne résultant de la combinaison OU, avec d'autres impulsions (I42) d'interrogation, pour obtenir le signal (De) numérique reçu, après avoir retardé de façon optimale ces impulsions d'interrogation avec un second retard (τ2), de sorte que l'échantillonnage s'effectue environ un quart de période de cadence après le front actif du signal (Dx) numérique.

2. Procédé suivant la revendication 1,
caractérisé en ce que
on combine par des opérations NON-OU la première moitié, en se référant au retard, des impulsions (I11 à I13), et
on incorpore le signal résultant de cette combinaison NON-OU dans la combinaison ET des impulsions restantes (I14 à I16), aux impulsions (I41) d'interrogation.

3. Montage pour recevoir un signal (D1) numérique binaire, qui peut également présenter des sauts de phase, avec utilisation d'une cadence (T), dont la fréquence est égale ou plésiochrone au débit binaire du signal (D1) numérique et dont la différence de phase par rapport à ce signal (D1) numérique est quelconque,
caractérisé en ce que
il est prévu une ligne à retard constituée de n-1 premiers circuits (2 à 6) à retard ayant un premier retard (τ1), qui servent à obtenir n-1 signaux numériques (D2 à D6) retardés à partir du signal (D1) numérique à l'entrée (1),
il est connecté à cette entrée (1) et à la sortie de chaque circuit (2 à 6) à retard un générateur d'impulsions parmi n générateurs (7 à 12) d'impulsions, qui génèrent des impulsions (I11 à I16) à partir des signaux (D1 à D6) numériques,
il est prévu un générateur (28) d'impulsions d'interrogation destiné à générer des impulsions (I41) d'interrogation à partir d'une cadence (T),
il est prévu n premières portes (14 à 19) ET, dont chaque première entrée est reliée à la sortie de l'un des générateurs (7 à 12) d'impulsions et dont chaque seconde entrée est reliée à la sortie du générateur (28) d'impulsions d'interrogation,
il est prévu n secondes portes (20 à 25) ET, dont les premières entrées sont reliées à l'entrée (1) ou à la sortie respectivement d'un circuit (2 à 6) à retard et dont les secondes entrées sont chacune reliées à l'une des premières portes (14 à 19) ET,
il est prévu une porte (26) OU, dont les entrées sont reliées respectivement à la sortie de l'une des secondes portes (20 à 25) ET,
il est prévu un second circuit (27) à retard ayant un second retard (τ2), qui est relié à la sortie du générateur (28) d'impulsions d'interrogation, et
il est prévu une bascule (32) D bistable, dont l'entrée D est reliée à la sortie de la porte OU (26), dont l'entrée de cadence est reliée à la sortie du second circuit (27) à retard et dont la sortie Q est reliée à la sortie (33) pour le signal (De) numérique reçu.

4. Montage suivant la revendication 3,
caractérisé en ce que
il est prévu une porte (13) NON-OU, dont les entrées sont reliées respectivement à une sortie de la première moitié, en se référant au retard du signal (D1) numérique, des générateurs (7 à 9) d'impulsions et dont la sortie est connectée à une entrée supplémentaire des premières portes ET (17 à 19), qui ne sont pas associées à ces entrées.

5. Montage suivant la revendication 3 ou 4,
caractérisé en ce que
il est prévu comme générateur (7 à 12) d'impulsions une porte OU-Exclusif (41), dont la première entrée est reliée à l'entrée (e) du générateur (7 à 12) d'impulsions, dont la seconde entrée est reliée par un troisième circuit (36) à retard ayant un troisième retard (τ3) à l'entrée (c) du générateur (7) d'impulsions et dont la sortie est reliée à la sortie (d) de ce générateur (7) d'impulsions.

6. Montage suivant la revendication 3 ou 4,
caractérisé en ce que
il est prévu, dans le générateur (28) d'impulsions d'interrogation, une porte ET (47), dont la première entrée non inversée est reliée à l'entrée (e) du générateur (28) d'impulsions d'interrogation, dont la seconde entrée inverseuse est reliée par un quatrième circuit (42) à retard ayant un quatrième retard (τ4) à l'entrée (e) du générateur (28) d'impulsions d'interrogation et dont la sortie est reliée à la sortie (f) de ce générateur (28) d'impulsions d'interrogation.

7. Montage suivant l'une des revendications 3 à 6,
caractérisé en ce que
il est prévu comme circuits (2 à 6, 27, 36, 42) à retard des circuits série de portes (34, 35, 37 à 40, 43 à 46).

8. Montage suivant la revendication 5 ou 7,
caractérisé en ce que
les premiers circuits (7 à 12) à retard servent au moins en partie en même temps de troisièmes circuits (36) à retard, par le fait que la seconde entrée de chaque porte (41) OU-Exclusif est reliée à la sortie du premier circuit à retard directement situé après celle-ci.

9. Montage suivant l'une des revendications 3 à 8,
caractérisé en ce que
il est prévu, au lieu des premières portes (14 à 19) ET, des premières portes (48 à 53) NON-ET, dont les premières entrées sont reliées à la sortie respectivement de l'un des générateurs (7 à 12) d'impulsions, dont les secondes entrées sont reliées à la sortie du générateur (28) d'impulsions d'interrogation et dont les troisièmes entrées sont reliées à la sortie de la première porte NON-ET située deux portes NON-ET en avant, ou est reliée lorsque cette dernière n'existe pas, au niveau "H" logique, et des secondes portes (54 à 59) NON-ET, dont les premières entrées sont chacune reliées à la sortie de la première porte NON-ET (48 à 53) de même ordre, dont les secondes entrées sont reliées à la première entrée de la seconde porte NON-ET suivante et dont la sortie est reliée à la seconde entrée de la porte ET (20 à 25) de même ordre.
